# EUROPEAN PATENT APPLICATION

(11) **EP 2 744 118 A1**
(43) Date of publication of application: **18.06.2014**
(21) Application number: 12823536.3
(22) Date of filing: 30.07.2012
(51) Int. Cl.: H04B 3/54

(54) **NETWORK FOR COMMUNICATING DATA USING ELECTRICAL CABLING**

(30) Priority: 12.08.2011 ES 201131390 P
(71) Applicant: Ricardo, Vila Caral, 08192 Sant Quirze Del Valles (Barcelona) (ES)
(72) Inventor: Ricardo, Vila Caral, 08192 Sant Quirze Del Valles (Barcelona) (ES)
(74) Representative: Durán-Corretjer, S.L.P.
(86) International application number: PCT/ES2012/070587
(87) International publication number: WO 2013/024193

(57) **Abstract**

PLC network for communicating data by means of electrical cabling, which network comprises at least one PLC network switching device and at least one PLC local area network connected to said PLC network switching device, wherein each PLC local area network interconnects a set of PLC receivers by means of electrical cabling which comprises at least one subset of internal conductors, wherein each subset is connected to a PLC local area network, characterized in that each subset of internal conductors is covered by a first coating which separates each subset of internal conductors from the rest of the subsets of internal conductors.

## Description

This invention relates to a data communication network.

In particular this invention relates to a data communication network using electrical cabling, also known as a PLC (Power Line Communications) network.

Data transmission through electrical cablings using PLC technology provides an opportunity to make use of existing electrical networks for the transmission of voice, video and digital data, through them. This PLC technology also makes it possible to create domestic and corporate local area networks (LAN) making use of the low voltage electrical infrastructure already present in a building for the interconnection of any type of peripheral device, such as, for example, a computer, a printer, or a television set, among many others, in a network.

An example of a system which makes it possible to create domestic local area networks, making use of the electrical wiring in houses, is based on the use of electrical cabling adaptors which are connected to the power sockets and make it possible to transmit data through the electrical infrastructure installed in a house, converting any socket into a network connection point. Each electrical cabling adaptor connected to a socket comprises at least one communications port of the Ethernet RJ45type, to which peripheral devices such as a router for gaining access to the Internet, a computer, a printer, etc., can be connected. Examples of these electrical cabling adaptors are devices according to the HomePlug, Universal Powerline Association or ITU Ghn standards respectively.

Other systems make it possible to offer broadband communications through ordinary medium and low voltage electrical cablings, where a computer or any other device is connected solely to one specific PLC modem connected to any power socket in a building equipped to have high-speed access to the Internet.

Thus any system for the transmission of voice, video and/or data via PLC technology, through either low, medium or high voltage networks, requires the use of the existing power network. Electrical power is transmitted through the power network at a frequency of 50 Hz or 60 Hz, while PLC technology uses a higher frequency range, that is between 1.6 and 100 MHz, for the transmission of any type of data. Accordingly, new PLC applications at frequencies of up to 100 MHz according to standard ITU-T G.hn/G.9960 have been developed and standardised. This makes it possible on the one side, to send a larger quantity of information at higher speed, but it also gives rise to an increase in the emission of undesired frequencies in the higher parts of the radio spectrum. Copper electrical cable is a metal cable which is likely to generate electromagnetic waves and in turn receive any surrounding electromagnetic noise, because of its unprotected nature. The interference produced through signals transmitted through the copper cables in this frequency range (between 1.6 and 100 MHz) may interfere with existing services or communications using the same bandwidth, for example amateur radio transmissions and Fire Service or Police communication services, as well as military communications. These interferences limit the data transmission capacity and speed of communications via PLC technology, and may also affect its privacy and security.

There are other communications systems which combine power cabling for energy and Ethernet cabling for data, in such a way that the cables for energy and data are duplicated respectively. The installation of such systems requires high costs and a large amount of time because of the doubling of the cables and the complexity of the system, and in many cases the data cabling, such as Ethernet via twisted pairs, has distance limitations in large buildings with extensive floors.

Thus it would be advantageous to have a system which made it possible to overcome the disadvantages mentioned. More particularly, one object of this invention is to provide a PLC communications network which can be optimally and conveniently installed in buildings and incurs a low cost. An additional object of this invention is to provide a large data transmission capacity PLC communications network for which the electrical cabling minimises existing interference between adjacent electrical cables.

According to this invention this is accomplished through a PLC electrical cabling data communications network which comprises at least one PLC network switching device and at least one PLC local area network connected to that PLC network switching device, each PLC local area network interconnecting a set of PLC receivers through an electrical cabling which comprises at least one earth conductor and at least one subset of internal conductors, each subset associated with a PLC local area network, characterised in that each subset of internal conductors is covered by a first lining which separates each subset of internal conductors from the other subsets of internal conductors. In this way interference produced by adjacent electrical cables can be reduced for each electrical cable associated with each local area network.

According to one embodiment of the invention, the electrical cabling comprises a second internal lining, which covers all the subsets of internal conductors.

In addition the electrical cabling comprises a connector of the male type at its ends and connection points, the connector comprising a metal connection corresponding to the earth connection, and at least one subset of metal rods, each subset of rods coinciding with a subset of internal conductors of said cable, each subset of metal rods being covered by a lining which coincides with the first lining, which covers each subset of internal conductors. By covering the male connector with a lining for each subset of metal rods the connector is screened, reducing interference between the different PLC local area networks in each port of the network switching device.

According to a preferred embodiment the lining which covers each subset of metal rods is a screen of the metal type.

Preferably a PLC signal is transmitted at a given frequency associated with a PLC local area network via each subset of internal conductors present in the electrical cabling. Thus if an electrical cabling has more than one subset of conductors, each of these covered by a lining, more than one PLC signal can be transmitted through the same electrical cabling without interference between the different PLC signals.

According to a preferred embodiment said first internal lining which covers each subset of internal conductors is a tape screen of the corrugated type.

According to another preferred embodiment said first internal lining which covers each subset of internal conductors is a tape screen of the helical type.

According to another preferred embodiment said first internal lining which covers each subset of internal conductors is a screen of the braided type.

Additionally the first lining for each subset of internal conductors is a screen of the metal type.

According to a preferred embodiment the second lining is a tape screen of the corrugated type.

According to another preferred embodiment the second lining is a tape screen of the helical type.

According to another preferred embodiment the second lining is a screen of braided type.

Each of the above embodiments of the second lining of the electrical cabling ensures great flexibility in installation of the electrical cabling and maximum protection against fire or short-circuits, while ensuring electromagnetic compatibility at all times.

Preferably said subset of conductors comprises at least two conductors, which may, for example, be of the single phase type (one phase and a neutral) or three phase type (3 phases and a neutral) for both 220V and 380V in both cases.

In addition to this the cable may comprise at least one earth conductor which may be housed within a first lining, for example in the case of cables with a single lining, or outside it. The earth conductor coincides with the corresponding earth connection of the connector.

According to another aspect of this invention the PLC network may be constructed using a PLC network switching device which comprises a series of communication ports for PLC, each port comprising a connector of the female type with a contact for the corresponding metal connection to the earth connection and at least one subset of electrical connection orifices for electrical cabling with at least one subset of electrical conductors, at least one PLC local area network being associated with each port, interconnecting each port with a set of PLC receivers via said electrical cabling, characterised in that each subset of orifices in the female type connector is lined by a corresponding lining which separates each subset of orifices from the rest of the subsets of orifices. In this way any interference produced by adjacent ports in any communications port of the device can be reduced, increasing the reliability and quality of communications between PLC local area networks.

Preferably the lining which covers each subset of orifices in the female type connector is a screen of the metal type.

In addition to this each PLC communications port in the device comprises an integrated PLC communications modem, through which useful data can be adjusted to the appropriate signal for the PLC technology. Each integrated modem preferably uses Orthogonal Frequency Division Multiplexing (OFDM) for modulation, because this provides for efficient use of the frequency spectrum of PLC technology, at the same time minimising interference with other radio services.

Preferably the network switching device comprises at least one module incorporating data packet switching connected to the series of communications ports. In this way intelligence is achieved when useful data from each user is channelled through the different PLC local area networks. Data packet switching is preferably performed using the standard IP ("Internet Protocol") communications protocol. In addition to this each data packet switching module comprises a virtual local area network or VLAN network management module, providing the capacity for creating logical networks between users who are not necessarily located in the same building, town or country.

Preferably the network switching device comprises a current consumption monitoring module for each port in the device.

More preferably the network switching device comprises a control module designed to cut off communications and/or electrical power from each of the PLC communications ports in the event of, for example, a short-circuit in any one of the PLC local area networks existing in each of the ports.

Preferably the network switching device comprises filters attenuating frequencies in excess of 1.6 MHz to prevent the PLC communications signal from being coupled between one PLC communications port and the adjacent ports through the 50 Hz or 60 Hz power supply.

For a better understanding of the invention various figures describing the different parts of a preferred embodiment of this invention are appended by way of an explanatory but not limiting example.
Figure 1 shows a general diagram of a PLC data communications network according to this invention.
Figure 2 shows the basic elements of the PLC network switching device according to this invention.
Figure 3 shows one arrangement of the PLC network device according to this invention.
Figure 4 shows a front view of a first embodiment of a male connector for a electrical cabling according to this invention.
Figure 5 shows a front view of a first embodiment of a female connector for a PLC network switching device or a connection point for a electrical cabling according to this invention.
Figure 6 shows a perspective view of a first embodiment of a male connector for a electrical cabling according to this invention.
Figure 7 shows a perspective view of a first embodiment of a female connector for a PLC network switching device or a connection point of the electrical cabling according to this invention.
Figure 8 shows a front view of a second embodiment of a male connector for a electrical cabling according to this invention.
Figure 9 shows a front view of a second embodiment of a female connector for a PLC network switching device or a connection point for the electrical cabling according to this invention.
Figure 10 shows a preferred embodiment of a electrical cabling according to this invention.

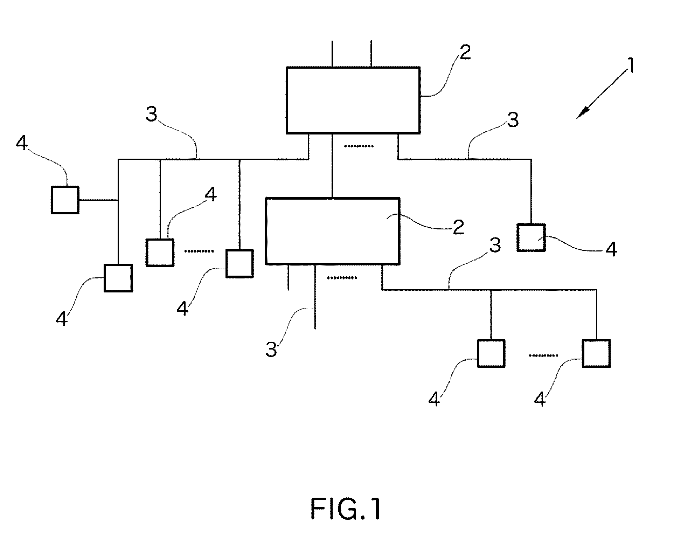

Figure 1 shows a PLC data communications network -1-comprising at least one PLC network switching device -2-which makes it possible to create, manage and control multiple PLC local area networks -3-. These PLC local area networks -3- comprise at least one user -4- with a modem receiver connected to a peripheral device, and thanks to the PLC network switching device -2- it is possible to communicate data between users -4- belonging to different PLC local area networks -3-. The modem receiver may be specific to the function of the peripheral device connected to it. Thus the peripheral device may for example be a computer, a television set or a printer, among many others. It should be pointed out that although the users -4- of the same PLC local area network -3- share a same communications signal within the frequency range between 1.6 and 100 MHz, the maximum transmission speed is achieved when a PLC local area network -3- has a single user connected to it, and the transmission speed will decrease as users are connected to the PLC local area network. There is also the possibility that various PLC network switching devices -2- may be connected in series, thus making it possible to increase the number of PLC local area networks -3-.

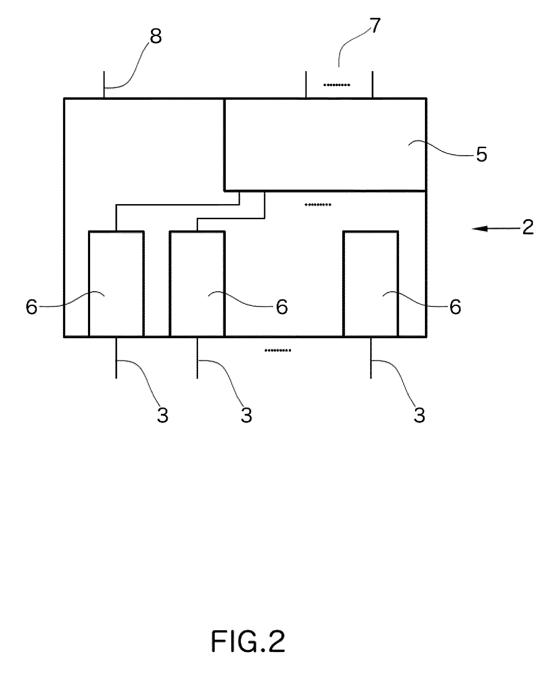

Figure 2 shows the internal structure of the PLC network switching device-2- which comprises a series of PLC communications ports with a PLC communications modem -6- integrated with each port, and a digital data switch -5-, together with a power source (not illustrated). Each modem -6- modulates the data originating from data switch -5-, such as data in packet form according to the standard IP communications protocol, in an electrical signal at a specific frequency (or, which is the same thing, in a specific channel) within the specific range of frequencies (or channels) for PLC technology (between 1.6 and 100 MHz), to be transmitted to the PLC local area network -3-associated with a communications port. Conversely data modulated to a given frequency of the electrical signal originating from one of the PLC local area networks -3-are demodulated by PLC modem -6- corresponding to the PLC local area network -3- into data packets according to the IP protocol, and sent to data packet switch -5-. Although there are many types of modulations which can be used for PLC technology, preferably each integrated modem -6- uses Orthogonal Frequency Division Multiplexing (OFDM) modulation, providing efficient use of the PLC technology frequency spectrum, at the same time minimising interference with other radio services without interrupting communications.

As mentioned previously, each PLC local area network -3- interconnects a set of users -4- each having a modem receiver connected to a peripheral device (computer, printer, television set, etc.). Interconnection is brought about through an electrical cabling which connects a communications port of the PLC network switching device -2- to the set of users -4- of a PLC local area network -3-. Said electrical cabling comprises at least one subset of internal conductors, and may, for example, be of the single phase type (one phase and a neutral) or three-phase type (3 phases and a neutral) for both 220V and 380V in both cases. In addition to this, said electrical cabling comprises at least one earth conductor.

It must be pointed out that a PLC signal is transmitted at a specific frequency within the range of frequencies for PLC technology, that is between 1.6 and 100 MHz, for each subset of internal conductors present in said electrical cabling. Thus in the case of an electrical cabling with more than one subset of conductors, more than one PLC signal can be transmitted through the same electrical cabling without interference between the different PLC signals.

Said electrical cabling comprises at least a first lining, which covers each subset of internal conductors. In this way the interference produced by electrical cables adjacent to them can be reduced for each electrical cabling.

Additionally said electrical cabling may comprise a second internal lining which covers all the subsets of internal conductors. The second internal lining which covers all the subsets of internal conductors present within said electrical cabling is normally a metal screen of copper or aluminium, which helps to protect said electrical cabling from the influence of external inductions, provides an outlet for default currents and also shields the cable from interruptions from external signals. The metal screen may, for example, be a tape screen of the corrugated type, a tape screen of the helical type or a screen of the braided type. Each of the above embodiments ensures great flexibility during installation of said electrical cabling and maximum protection against fire and/or short-circuits, while ensuring electromagnetic compatibility with respect to other electronic equipment at all times.

The characteristics of the first lining may be the same as any of those described here for the second lining, especially in those electrical cablings with a single subset of internal conductors.

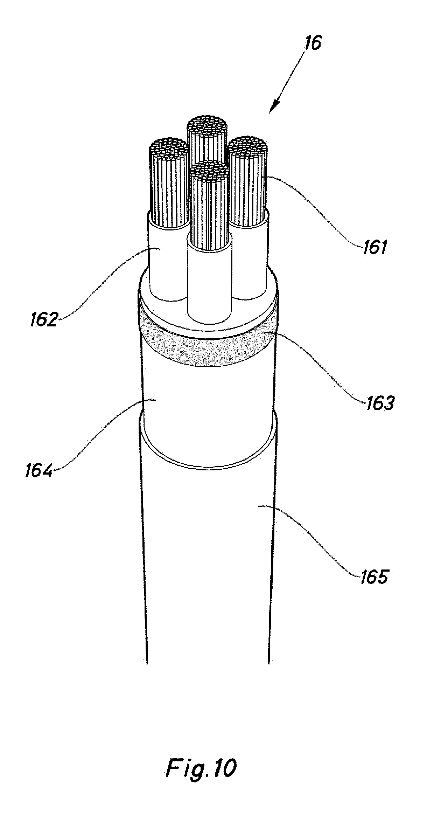

Figure 10 shows an embodiment of an electrical cable -16- in which two pairs of flexible copper conductors -161- of class 5 are grouped together, each of conductors -161- being insulated through an insulator of polyethylene mesh -162- which protects the cable electrically from the environment. All the conductors -161- located within cable -16- are first coated with a layer of halogen-free thermoplastic polyolefin sheathing -163- and subsequently with a helical copper tape screen -164-. Finally cover -165- for cable -16- is also manufactured on the basis of halogen-free thermoplastic polyolefin. The distribution of layers makes it possible to obtain a cable -16- which is optimal for low voltage power supply and PLC data communication, ensuring electromagnetic protection. Likewise electrical cable -16- can reduce cross-talk between electrical cables when these are located in parallel within the same conduit or cable tray, from a floor distributor to the user's socket, or between distributors such as a floor distributor, a building distributor, a campus distributor, or a distribution center for an electrical power services operator. Additionally this specific type of cable allows great distances to be covered and the possibility of connection to the same channel at various points, and furthermore makes it possible to optimise the cost of an electrical system by adapting it to the installation of other types of electrical cablings.

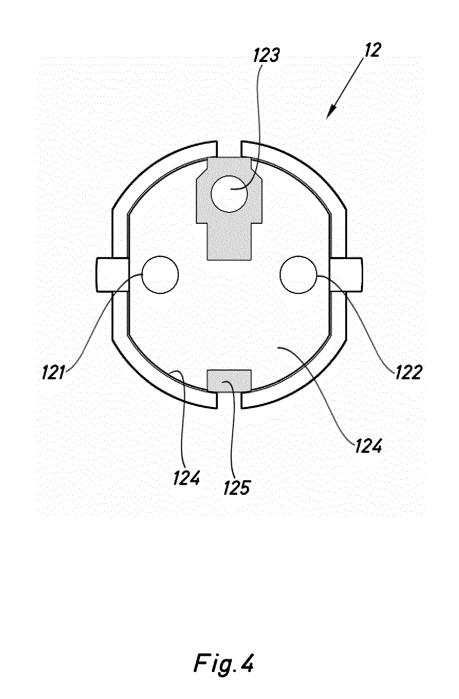

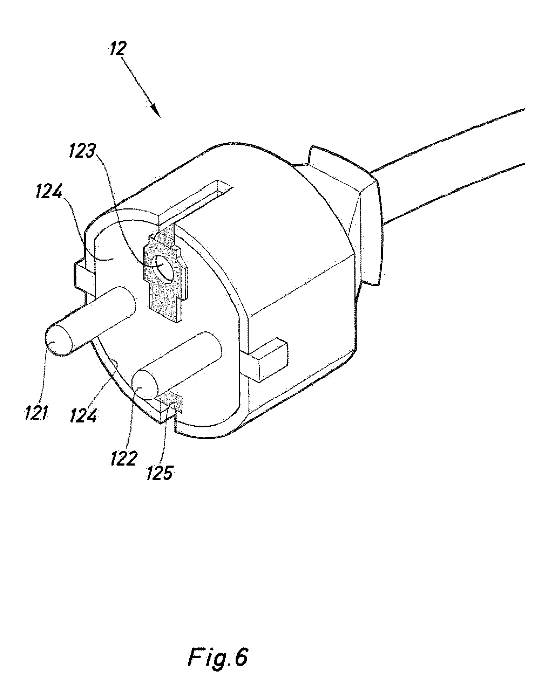

Said electrical cabling comprises a connector of the male type with a series of metal rods which may for example be a male connector of the single phase type (one phase, a neutral and earth) or of the three-phase type (3 phases, a neutral and earth) for both 220V and 380V in both cases, at its end and at connection points. Figures 4 and 6 show front and perspective views respectively of a preferred embodiment of a male connector -12- of the single phase type, which comprises a rod -121-corresponding to the phase line, a rod -122- corresponding to the neutral line, and a metal connection (-123-, -125-) corresponding to the earth connection, although the latter may run outside the cable. Pair of rods (-121, -122-) coincides respectively with the pair of conductors of a single phase electrical cabling. The connector comprises an internal lining -124- of the metal screen type which surrounds and covers the pair of metal rods in such a way as to screen the pair of connections and thus prevent and reduce interference between the different PLC local area networks -3- for each port in network switching device -2-.

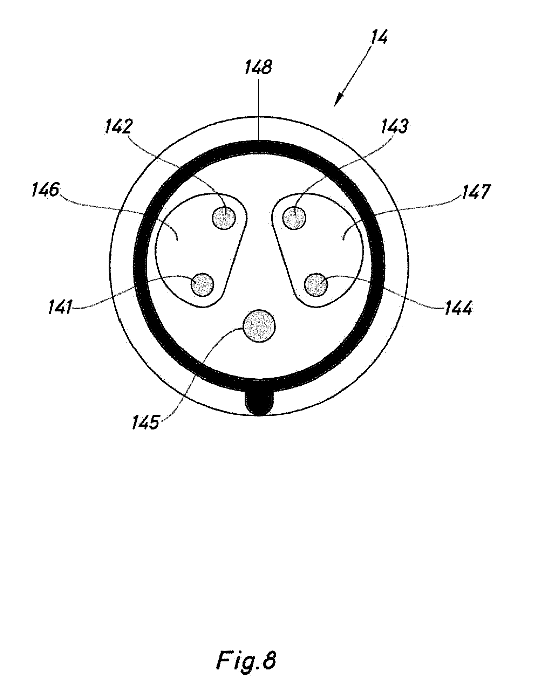

Figure 8 shows a front view of another preferred embodiment of a male connector -14- of the three-phase type which comprises a first rod -141- corresponding to a first phase line, a second rod -142- corresponding to a second phase line, a third rod -143- corresponding to a third phase line, a fourth rod -144- corresponding to a neutral line, and a fifth rod -145- corresponding to the earth connection, although the latter may run outside the cable.

Each rod (-141-, -142-, -143-, -144-, -145-) for connector -14- coincides with each conductor present in an electrical cabling of the three-phase type respectively. In this case, and in order to allow PLC communication through more than one channel (signal at a specific frequency), the connector comprises a first -146- and a second -147- internal lining of the metal screen type which surrounds and covers each pair of metal rods respectively, for example pair (-141-, -142-) and pair (-143-, -144-), in such a way as to screen each pair of connections and thus prevent or reduce any interference which may exist between the different pairs (-141-, -142-) and (-143-, -144-), each pair corresponding to a different PLC local area network -3-. Optionally connector -14-comprises an overall lining -148- which covers all of the metal rods present in connector -14-.

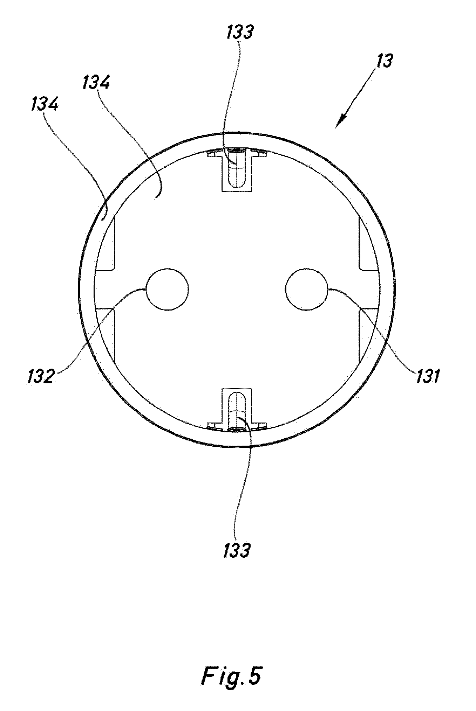

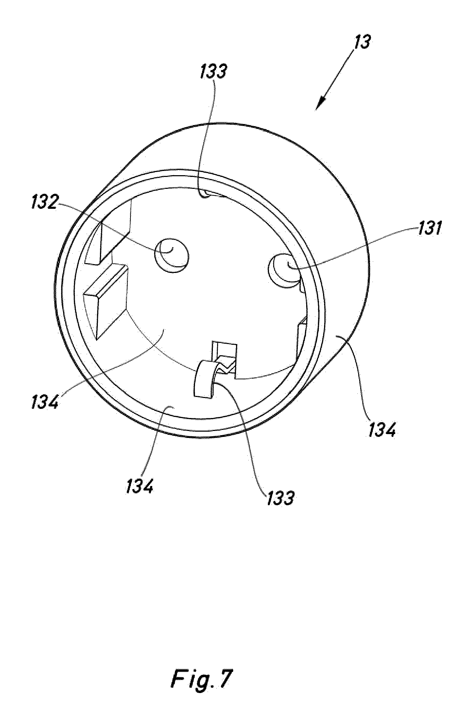

With regard to PLC network switching device -2-, each PLC communications port connects a set of users -4-forming a PLC local area network -3- through an electrical cabling. The electrical cabling interconnection from the side of PLC network switching device -2- ends in a connector of the female type, with a series of orifices for electrical connection with a male connector such as any of those mentioned previously. The female connector may for example be a female connector of the single phase type (one phase, a neutral and earth) or of the three-phase type (3 phases, a neutral and earth), for both 220V and 380V in both cases. Figures 5 and 7 show front and perspective views respectively of a preferred embodiment of a female connector -13- of the single phase type, which comprises an orifice -131- corresponding to the phase line, an orifice -132- corresponding to the neutral line, and a metal connection (-133-) corresponding to the earth connection, although the latter may run outside the cable.

Said pair of orifices (-131-, -132-) is designed to coincide with and create an electrical connection with the pair of rods (-121-, -122-) of the male connector -12- of a single phase electrical cabling respectively. Female connector -13- comprises an internal lining -134- of the metal screen type which surrounds and covers the pair of orifices (-131-, -132-) in such a way as to screen the pair of connections and thus prevent and reduce interference between the different PLC local area networks -3- at each port of network switching device -2-.

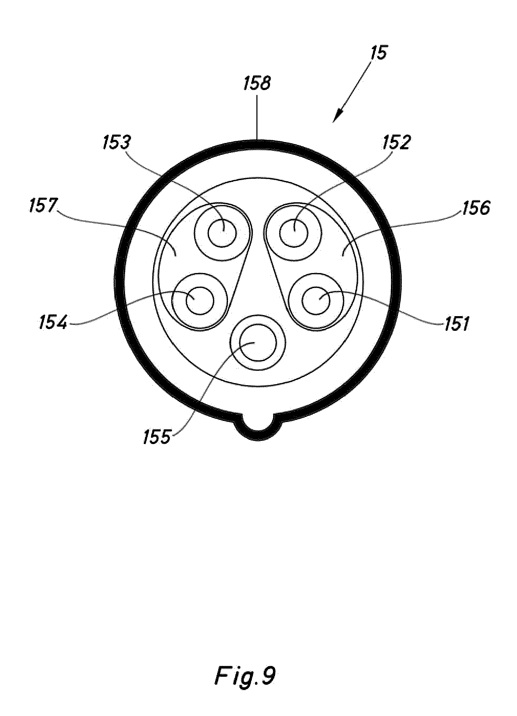

Figure 9 shows a front view of another preferred embodiment of a female connector -15- of the three-phase type, which comprises a first orifice -151- corresponding to a first phase line, a second orifice -152-corresponding to a second phase line, a third orifice -153- corresponding to a third phase line, a fourth orifice -154- corresponding to a neutral line, and a fifth orifice -155- corresponding to the earth connection, although the latter may run outside the cable.

Each orifice (-155-, -152-, -153-, -154-, -155-) of female connector -15- is designed for electrical connection with each rod (-141-, -142-, -143-, -144-, -145-) respectively of a male connector -14- for an electrical cable of the three-phase type. In order to permit PLC communication through more than one channel (signal at a specific frequency) female connector -15-comprises a first -156- and a second -157- internal lining of the metal screen type which surrounds and covers each pair of orifices respectively, for example pair (-151-, -152-) and pair (-153-, -154-) in such a way as to screen each pair of connections and thus avoid and reduce any interference which may exist between the different pairs (-151-, -152-) and (-153-, -154-), each pair corresponding to a different PLC local area network -3-. Optionally connector -15- comprises an overall lining -158- which covers all the orifices present in connector -15-.

Additionally, as shown in Figure 2, PLC network device -2- comprises a data packet switching module -5-such as an Ethernet data switch according to standard IEEE 802 which has the function of routing digital data, according to the IP protocol, originating from any PLC local area network -3-, or any other external communications ports -7-. External communications ports -7- may be ports designed for connection to optical fibre, ADSL, PLC, etc. networks. Additionally data packet switching module -5- comprises a virtual local area network or VLAN network management module, making it possible to create logical networks between users who are not necessarily located in the same building, town or country. Additionally PLC network device -2- comprises a current consumption monitoring module for each communications port of device -2- through a shunt or equivalent device capable of monitoring the current consumed at each of the communications ports. PLC network switching device -2- comprises a supply control module designed to cut off communications and/or electrical power from each of the PLC communications ports in the event of, for example, a short-circuit in any of the PLC local area networks -3- present at any of the ports.

PLC network switching device -2- comprises filters for attenuating frequencies higher than 1.6 MHz, to prevent the PLC communications signal being coupled from a PLC communications port to adjacent ports through the 50 Hz or 60 Hz electrical cabling -8-.

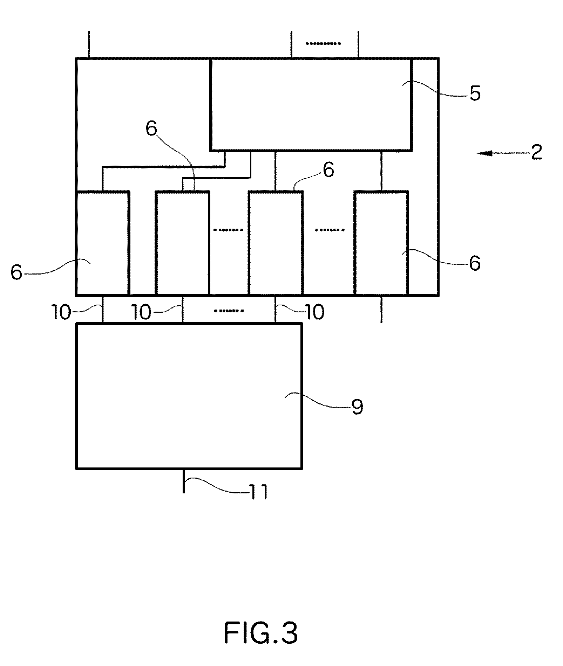

Figure 3 illustrates an arrangement of PLC network switching device -2- incorporating at least two electrical cablings of the above type, through a multiplexer device -9- capable of frequency multiplexing the different PLC signals propagating through each electrical cabling respectively. This possibility makes it possible to group different signals from different PLC local area networks -3- into a single transmission medium.

This frequency multiplexing also makes it possible to increase the data transmission speed of a PLC local area network -3-. In this case the resultant multiplexed signal which is transmitted through PLC local area network -11- will allow between 1.6 MHz and n times the greatest frequency of each of the multiplexed PLC signals, where n is the number of multiplexed PLC signals. This is one example of the use of another of the features of this invention, as is the ability to transmit from said electrical cabling of the PLC network, which is also designed to support future PLC applications using greater bandwidths.

Although the invention has been described with respect to a preferred embodiment, this should not be regarded as limiting the invention, which will be defined by the broadest interpretation of the following claims.

## Claims

1. Data communications PLC network, by means of electrical cabling, comprising at least one PLC network switching device and at least one PLC local area network, connected to a PLC network switching device, each PLC local area network interconnecting a set of PLC receivers through an electrical cabling, comprising at least one earth conductor and at least one subset of internal conductors, each subset being associated with a PLC local area network, **characterised in that** each subset of internal conductors is covered by a first lining which separates each subset of internal conductors from the other subsets of internal conductors.

2. A PLC network according to claim 1, **characterised in that** the electrical cable comprises a second internal lining which covers all the subsets of internal conductors.

3. A PLC network according to claim 1 or 2, **characterised in that** the electrical cabling comprises a connector of the male type comprising a metal connection corresponding to the earth connection and at least one subset of metal rods, each subset of rods coinciding with a subset of conductors within the cable, at its ends and at connection points, each subset of metal rods being covered by a lining coinciding with the first lining, which covers each subset of internal conductors.

4. A PLC network according to claim 3, **characterised in that** each subset of internal conductors present in said electrical cabling transmits a PLC signal at a specific frequency associated with the PLC local area network.

5. A PLC network according to claim 1, **characterised in that** the first lining is a tape screen of the corrugated type.

6. A PLC network according to claim 1, **characterised in that** the first lining is a tape screen of the helical type.

7. A PLC network according to claim 1, **characterised in that** the first lining is a screen of the braided type.

8. A PLC network according to claim 1, **characterised in that** the first lining is a screen of the metal type.

9. A PLC network according to claim 2, **characterised in that** the second lining is a tape screen of the corrugated type.

10. A PLC network according to claim 2, **characterised in that** the second lining is a tape screen of the helical type.

11. A PLC network according to claim 2, **characterised in that** second lining is a screen of the braided type.

12. A PLC network according to claim 3, **characterised in that** the lining which covers each subset of metal rods is a screen of the metal type.

13. A PLC network according to claim 4, **characterised in that** the subset of conductors comprises at least two conductors.

14. A PLC network switching device for use in a PLC network according to claims 1 to 13, which comprises a series of PLC communications ports, each port comprising a connector of the female type with a contact for the metal connection corresponding to the earth connection, and at least one subset of electrical connection orifices for an electrical cabling, with at least one subset of electrical conductors, and at least one PLC local area network being associated with each port, each port interconnecting a set of PLC receivers via said electrical cabling, **characterised in that** each subset of orifices in the connector of the female type is covered by a corresponding lining which separates each subset of orifices from the other subsets of orifices.

15. A PLC network switching device according to claim 14, **characterised in that** each PLC communications port of the device comprises an integrated PLC communications modem.

16. A PLC network switching device according to claim 15, **characterised in that** each integrated modem uses OFDM modulation.

17. A PLC network switching device according to claims 14 and 15, **characterised in that** it comprises at least one integrated data packet switching module, connected to the series of communications ports.

18. A PLC network switching device according to claim 17, **characterised in that** data packet switching is brought about using the IP communications protocol.

19. A PLC network switching device according to claim 18, **characterised in that** the data packet switching module comprises a virtual local area network management module.

20. A PLC network switching device according to claims 14 and 15, **characterised in that** it comprises a module monitoring the power consumption of each port in the device.

21. A PLC network switching device according to claims 14 and 15, **characterised in that** it comprises a control module designed to cut off communications and/or electrical power from each of the PLC communications ports.

22. A PLC network switching device according to claims 14 and 15, **characterised in that** it comprises filters, attenuating frequencies in excess of 1.6 MHz.

23. A PLC network switching device according to the preceding claims, **characterised in that** the lining which covers each subset of orifices in the female type connector is a screen of the metal type.
